# EUROPEAN PATENT SPECIFICATION

(11) **EP 1 153 278 B1**
(45) Date of publication and mention of the grant of the patent: **21.06.2006**
(21) Application number: 00901740.1
(22) Date of filing: 31.01.2000
(51) Int. Cl.: G01N 1/40

(54) **IMPROVED VACUUM CONTROL IN EVAPORATORS**
VERBESSERTE UNTERDRUCKSTEUERUNG IN VERDAMPFERN
COMMANDE AMELIOREE DE VIDE DANS DES EVAPORATEURS

(30) Priority: 09.02.1999 GB 9902747; 08.12.1999 GB 9928874
(43) Date of publication of application: 14.11.2001
(73) Proprietor: Genevac Limited, Ipswich, Suffolk IP1 5AP (GB)
(72) Inventor: COLE, Michael, Saxmundham IP17 1NH (GB)
(74) Representative: Nash, Keith Wilfrid
(86) International application number: PCT/GB2000/000274
(87) International publication number: WO 2000/047975

(56) References cited:
- EP-A- 0 335 278
- EP-A- 0 818 223
- GB-A- 2 332 865
- US-A- 3 871 574
- US-A- 3 977 935
- US-A- 5 137 604

## Description

### Field of invention

This invention concerns evaporators and in particular methods of controlling vacuum levels in evaporators during evaporation of liquid samples, so as to minimise loss of sample material due to spitting.

### Background to the invention

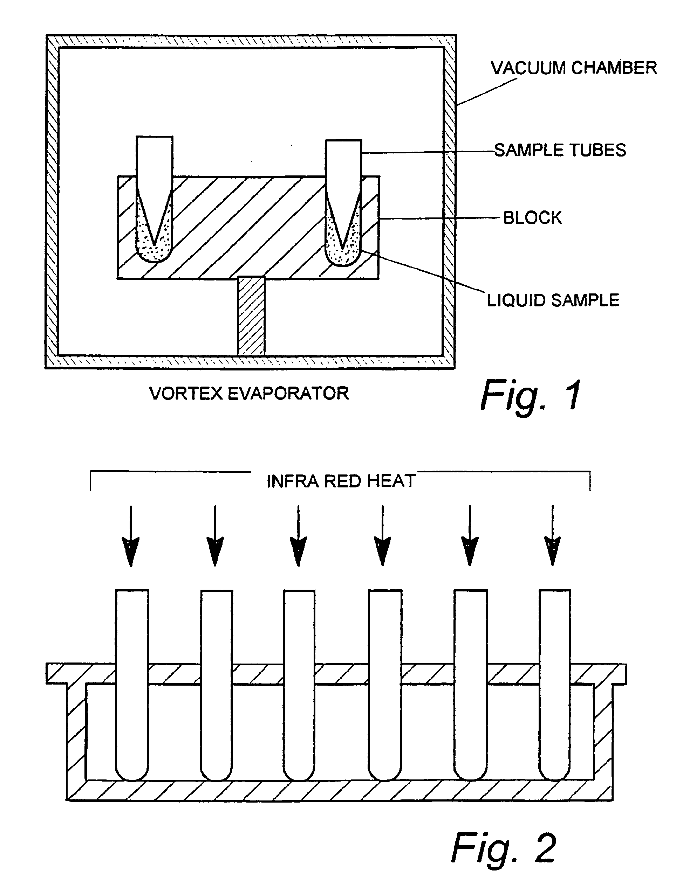

A vortex evaporator typically consists of a vacuum chamber in which liquid samples, generally containing dissolved solids, are held in containers such as glass tubes, which in turn are frequently held in heated aluminium blocks and subjected to orbital motion. This motion causes the liquid in the tubes to spin round inside the tubes and form a vortex. This motion increases the surface area of contact between the liquid and the wall of the container thereby increasing the amount of heat transferred to the liquid and increasing evaporation rate when the samples are subjected to vacuum by evacuation of the chamber. An example of such a device is shown in Figure 1.

In vortex evaporators the vacuum pressure has to be carefully controlled (usually manually) so that it is low enough to promote rapid evaporation but not low enough to cause bumping or spitting of the liquids.

In order to deal with this disadvantage, an operator has to watch an evaporator during its operation and attempt to control the vacuum manually to achieve a reasonable evaporation rate. However it is nearly impossible to ensure that no spitting occurs and even if only limited spitting occurs, samples loss and cross-contamination of samples may take place.

In US-A-3,8871,574 there is described a method and apparatus for concentrating a thermo-labile liquid having a volatile component, in which the liquid is heated and centrifuged in a container rotated about its vertical axis while reducing the gas pressure therein. The container is rotated at a speed, and the liquid temperature and the pressure are maintained at a level, sufficient to eliminate foaming of the liquid.

US-A-5,137,604 is concerned with a similar apparatus, in which flow control means and a refrigerated cold trap are interposed between a drying chamber and a vacuum pump. The solvent in a specimen rotated in said chamber without the creation of a vortex is heated, and the pressure in said chamber is smoothly reduced so as to mitigate the tendency of specimen material to flash precipitously.

It is an object of the present invention to provide an improved pressure control method for an evaporator which overcomes the above disadvantages.

### Summary of the invention

According to the present invention there is provided a method of controlling the vacuum pressure in an evaporator, in which a liquid sample contained in at least one sample tube is caused to perform an orbital motion which creates a vortex, and in which the vacuum pressure is gradually reduced so as to provide liquid sample evaporation at a rate which from previous observation will not cause spitting, by monitoring the sample temperature, and reducing the pressure to the lowest level at which it is known from previous experimentation that spitting will not occur from the liquid sample at its monitored temperature.

Particular embodiments of the invention are defined in the appended dependent claims.

### Brief description of the drawings

Figure 1 is a view in elevation of a known vortex evaporator, as referred to above;
Figure 2 is a sectional view showing sample tubes mounted in racks in such a known evaporator, as above referred to; and
Figure 3 is a view of a rack similar to that in Figure 2 but in accordance with the present invention.

### Detailed description

Referring first to Figure 2, there is shown a vortex evaporator, in which the samples are held in tubes mounted in racks. Infrared heat is applied to the samples from above, as shown.

Instead of the evaporator being contained in a vacuum chamber, vacuum may alternatively be applied individually to each tube, and the space outside the tubes open to atmosphere or any other medium which may be desirable. This arrangement makes it easier to apply heat to the samples, although it may present difficulties in designing reliable vacuum sealing means for each individual sample tube.

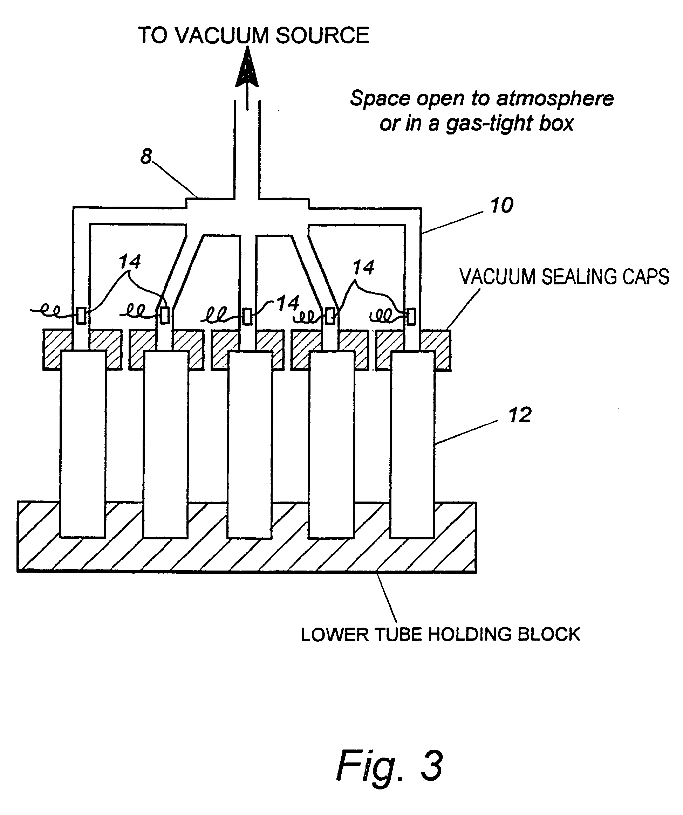

An example of individual suction being applied via a manifold 8, to a rack of sample tubes 12 is shown in Figure 3, which is a schematic view in elevation.

Mounted in the vacuum tube 10 of each sample tube 12 is a crystal pressure transducer 14 which transmits a signal corresponding to the instantaneous pressure in that tube to a central control for determining the vacuum pressure to be applied to the manifold 8. Where the samples in the tubes are of similar composition, a single transducer may instead be disposed in the manifold 8.

Likewise, where the evaporator is mounted in a vacuum chamber, a single pressure transducer enables the pressure spikes to be detected.

## Claims

1. A method of controlling the vacuum pressure in an evaporator, in which a liquid sample contained in at least one sample tube is caused to perform an orbital motion which creates a vortex, and in which the vacuum pressure is gradually reduced so as to provide liquid sample evaporation at a rate which from previous observation will not cause spitting, by monitoring the sample temperature, and reducing the pressure to the lowest level at which it is known from previous experimentation that spitting will not occur from the liquid sample at its monitored temperature.

2. A method according to claim 1, wherein, as evaporation cools the liquid sample, the pressure is reduced correspondingly.

3. A method according to claim 1 or claim 2, wherein the pressure to which a sample is exposed at any given temperature is determined from a look-up table or tables containing data from previous experimentation using the liquid or liquids to be evaporated.

4. A method according to claim 3, wherein the said data is stored in digital form in a computer memory associated with the evaporator control system.

5. A method according to claim 3 or claim 4, wherein the data is called up by the operator before starting an evaporation run, and the evaporator control system is programmed to control the pressure to the lowest safe value for the given liquid using the temperature-pressure information stored in the memory from earlier monitoring.

6. A method according to any one of claims 1 to 5 in which in which the vacuum pressure is also monitored by means of a pressure transducer and controlled at least in part from signals derived from the transducer.

7. A method according to claim 6, wherein the transducer comprises a crystal transducer or a microphone.

8. A method according to claim 6 or claim 7, in which the evaporator is mounted in a vacuum chamber, and wherein the chamber pressure is first reduced until pressure spikes are detected in the transducer output whereupon the pressure is held constant or increased by a small amount and then held constant, until the pressure spike signals cease, at which point the pressure is steadily again further reduced until pressure spike signals are again detected, when the above procedure is repeated.

9. A method according to claim 6, wherein stored pressure/temperature information is used to allow the vacuum pressure to be pumped down rapidly to a safe level, and then more slowly to the level at which pressure spike signals are detected.

10. A method according to any of claims 1 to 9, in which the evaporator comprises a plurality of sample tubes and vacuum is applied individually to each sample tube, the space outside the tubes being open to atmosphere or any other fluid medium.

## Patentansprüche

1. Ein Verfahren zum Steuern des Unterdrucks in einem Verdampfer, bei dem eine in mindestens einem Probenrohr enthaltene Flüssigkeitsprobe in eine einen Wirbel erzeugende Kreisbewegung gebracht wird, wobei der Unterdruck fortschreitend zum Erreichen einer Verdampfung der flüssigen Probe mit einem Geschwindigkeit herabgesetzt wird, die gemäß früherer Beobachtung kein Sprühen bewirkt, durch Überwachen der Probentemperatur und Herabsetzen des Drucks auf den niedrigsten Wert, von dem aus früheren Versuchen bekannt ist, daß ein Versprühen aus der flüssigen Probe bei der überwachten Temperatur nicht auftritt.

2. Ein Verfahren nach Anspruch 1, wobei beim Kühlen der flüssigen Probe durch Verdampfen der Druck entsprechend herabgesetzt wird.

3. Ein Verfahren nach Anspruch 1 oder Anspruch 2, bei dem der Druck, dem eine Probe bei irgendeiner gegebenen Temperatur ausgesetzt wird, aus einem Nachschlagetabelle oder -tabellen ermittelt wird, die Daten aus der zu verdampfenden Flüssigkeit oder den zu verdampfenden Flüssigkeiten aus früheren Versuchen enthalten.

4. Ein Verfahren nach Anspruch 3, wobei die Daten in digitaler Form in einem mit dem Verdampfersteuersystem zusammenarbeitenden Computerspeicher abgespeichert werden.

5. Ein Verfahren nach Anspruch 3 oder Anspruch 4, wobei die Daten durch den Betreiber vor dem Beginn eines Verdampfungsvorgangs aufgerufen werden und das Verdampfersteuersystem auf das Einsteuern des Druckes auf den für die gegebene Flüssigkeit niedrigsten sicheren Wert programmiert wird unter Verwendung der aus einer früheren Überwachung im Speicher abgespeicherten Temperatur-Druck-Information.

6. Ein Verfahren nach irgendeinem der Ansprüche 1 bis 5, bei dem der Vakuumdruck mit Hilfe eines Druckübertragers überwacht und mindestens zum Teil mit vom Übertrager abgeleiteten Signalen gesteuert wird.

7. Ein Verfahren nach Anspruch 6, wobei der Übertrager ein Kristallübertrager oder ein Mikrofon ist.

8. Ein Verfahren nach Anspruch 6 oder Anspruch 7, bei dem der Verdampfer in einer Unterdruckkammer angeordnet ist und wobei der Kammerdruck zuerst herabgesetzt wird, bis Druckspitzen in dem Übertragerausgang detektiert werden, worauf der Druck konstant gehalten oder um einen kleinen Betrag erhöht und dann konstant gehalten wird, bis die Druckspitzensignale enden, an welcher Stelle der Druck stetig wieder weiter herabgesetzt wird, bis die Druckspitzensignale wieder detektiert werden, wenn die obige Vorgang wiederholt wird.

9. Ein Verfahren nach Anspruch 6, wobei die gespeicherte Druck/Temperatur-Information verwendet wird zum Ermöglichen des schnellen Herunterpumpens des Vakuumdrucks auf eine sichere Höhe und dann langsamer auf die Höhe, auf der die Druckspitzensignale detektiert werden.

10. Ein Verfahren nach irgendeinem der Ansprüche 1 bis 9, bei dem der Verdampfer eine Vielzahl von Musterrohren aufweist und der Unterdruck einzeln an jedes Musterrohr angelegt wird und der Raum außerhalb der Rohre zur Atmosphäre oder irgendeinem anderen strömungsfähigen Medium offen ist.

## Revendications

1. Procédé pour commander la dépression dans un évaporateur, dans lequel un échantillon liquide contenu dans au moins un tube d'échantillon est amené à effectuer un mouvement orbital qui crée un vortex et dans lequel la dépression est graduellement diminuée de manière à fournir une évaporation de l'échantillon liquide à un taux qui, sur la base d'observations précédentes, n'entraînera pas de projections, en surveillant la température de l'échantillon et en réduisant la pression au niveau le plus bas auquel il est connu, sur la base d'expériences précédentes, que des projections ne se produiront pas de l'échantillon liquide à sa température surveillée.

2. Procédé selon la revendication 1, dans lequel, à mesure que l'évaporation refroidit l'échantillon liquide, la pression est diminuée de manière correspondante.

3. Procédé selon la revendication 1 ou la revendication 2, dans lequel la pression à laquelle un échantillon est exposé à n'importe quelle température donnée est déterminée à partir d'une table ou de tables de recherche contenant des données d'expériences précédentes où le liquide ou les liquides à évaporer ont été utilisés.

4. Procédé selon la revendication 3, dans lequel lesdites données sont mémorisées sous forme numérique dans une mémoire d'ordinateur associée au système de commande d'évaporateur.

5. Procédé selon la revendication 3 ou la revendication 4, dans lequel les données sont appelées par l'opérateur avant de commencer un processus d'évaporation et le système de commande d'évaporateur est programmé afin de commander la pression à la valeur de sécurité la plus basse pour le liquide donné en utilisant les informations de température et de pression mémorisées dans la mémoire à la suite d'une surveillance ultérieure.

6. Procédé selon l'une quelconque des revendications 1 à 5, dans lequel la dépression est également surveillée au moyen d'un capteur de pression et commandée au moins partiellement sur la base des signaux déduits du capteur.

7. Procédé selon la revendication 6, dans lequel le capteur comprend un capteur à cristal ou un microphone.

8. Procédé selon la revendication 6 ou la revendication 7, dans lequel l'évaporateur est monté dans une chambre à vide et dans lequel la chambre à vide est d'abord diminuée jusqu'à ce que des pointes de pression soient détectées dans la sortie de capteur, après quoi la pression est maintenue à un niveau constant ou augmentée dans une faible proportion puis maintenue à un niveau constant, jusqu'à ce que les signaux de pointe de pression cessent, auquel moment la pression est à nouveau progressivement diminuée jusqu'à ce que des signaux de pointe de pression soient à nouveau détectés, lorsque la procédure ci-dessus est répétée.

9. Procédé selon la revendication 6, dans lequel les informations mémorisées de pression/température sont utilisées afin de permettre un tirage au vide rapide de la dépression jusqu'à un niveau sécurisé, puis plus lentement jusqu'au niveau auquel des signaux de pointe de pression sont détectés.

10. Procédé selon l'une quelconque des revendications 1 à 9, dans lequel l'évaporateur comprend une pluralité de tubes d'échantillon et la dépression est appliquée individuellement à chaque tube d'échantillon, l'espace à l'extérieur des tubes étant ouvert à l'atmosphère ou à n'importe quel autre milieu fluide.
